# EUROPEAN PATENT APPLICATION

(11) **EP 4 556 525 A1**
(43) Date of publication of application: **21.05.2025**
(21) Application number: 24211317.3
(22) Date of filing: 07.11.2024
(51) Int. Cl.: C08L 67/02

(54) **POLYESTER COMPOSITION AND ITS MOLDED PRODUCT**

(30) Priority: 20.11.2023 TW 112144803; 20.11.2023 CN 202311543310
(71) Applicant: Chang Chun Plastics Co., Ltd., Taipei City 10491 (TW)
(72) Inventor: HUANG, Shih-Yu, Taipei City (TW)
(74) Representative: Cabinet Chaillot

(57) **Abstract**

Provided are a polyester composition and its product. The polyester composition comprises polybutylene terephthalate resin and is analyzed by small angle X-ray scattering (SAXS) to obtain a spectrum with the vertical axis representing scattering intensity and the horizontal axis representing scattering vector. A slope of the SAXS spectrum ranges from -2.00 to -4.20 within the scattering vector ranging from 0.15 nm⁻¹ to 0.20 nm⁻¹. The polyester composition with the foresaid features can have improved laser transmittance and low electromagnetic wave transmission loss, thereby enhancing the value of plastic products joined by laser welding.

## Description

The instant disclosure relates to a polyester composition and the molded product manufactured by the same, more particularly to a polyester composition comprising polybutylene terephthalate resin (PBT resin) and the molded product manufactured by the same.

Laser welding is a technology that adopts a laser beam to join two objects. When the laser welding is utilized to join two or more polymer parts, the heat generated from the laser beam will melt the interface between the polymer parts; then, the molten material solidifies during the subsequent cooling process to join the two or more polymer parts. Compared with traditional plastic joining, the laser welding can precisely control the welding area, so it is particularly suitable for high-precision joining needs such as delicate weld seams.

Among various thermoplastic resins, PBT has become one of polyester materials which can be widely-used in laser welding since PBT has good mechanical properties, good formability, good chemical stability and good dimensional stability.

However, restricted by low transmittance to laser beams, polyester materials in the past are not suitable for use in laser welding and there are design limitations when adopting laser welding to join plastic objects, which inhibits the enhancement in welding speed. Besides, the electromagnetic wave transmission loss of the available polyester materials also needs to be improved so that laser welding can be actively used in products in the vehicles, communications, aerospace and medical industries, and said products are expected to meet the requirements of the next generation of high-frequency communications.

Therefore, there is still a need to improve the transmittance to laser beams and electromagnetic wave transmission loss of polyester materials in order to overcome the shortcomings of the prior arts.

In view of the above technical defects, an objective of the instant disclosure is to improve the laser transmittance of a polyester composition, thereby expanding the applications and flexibility of laser welding and increasing the value of the welded plastic product thereof.

Another objective of the instant disclosure is to reduce the electromagnetic wave transmission loss of the polyester composition to meet the requirements of the next generation high-frequency communications.

To achieve the aforementioned objective, the instant disclosure provides a polyester composition comprising PBT resin. The polyester composition is analyzed by small angle X-ray scattering (SAXS) to obtain a spectrum with a vertical axis representing scattering intensity and a horizontal axis representing scattering vector. In the spectrum, within the scattering vector ranging from 0.15 nm⁻¹ to 0.20 nm⁻¹, the SAXS spectrum of the polyester composition has a slope ranging from -2.00 to -4.20.

In addition, the instant disclosure also provides a molded product, which is manufactured by a raw material comprising the above-mentioned polyester composition.

By controlling the slope within the specific scattering vectors in the SAXS spectrum, the polyester composition of the instant disclosure can have an improved laser transmittance and low electromagnetic wave transmission loss. Accordingly, compared with conventional polyester materials, the polyester composition and/or the molded products thereof of the instant disclosure have a higher total transmittance under the near infrared light, and the polyester composition and/or the molded products thereof have lower dielectric constants and/or dissipation factor.

According to the instant disclosure, compared with the conventional polyester materials, since the polyester composition and/or the molded products thereof of the instant disclosure have both high laser transmittance and low electromagnetic wave transmission loss, the polyester composition and/or the molded products thereof of the instant disclosure products can be particularly suitable for products in the vehicles, communications, aerospace and medical industries; for example, housings of connectors, sensors, controllers or cameras or 5G communication materials, but it is not limited thereto.

Optionally, within the scattering vector ranging from 0.15 nm⁻¹ to 0.20 nm⁻¹, the slope of the SAXS spectrum of the polyester composition and/or the molded products thereof may be -2.00, -2.10, -2.20, -2.30, -2.40, -2.50, -2.60, -2.70, -2.80, -2.90, -3.00, -3.10, -3.20, -3.30, -3.40, -3.50, -3.60, -3.70, -3.80, -3.90, -4.00, -4.10 or -4.20; or, the slope may fall within the ranges between any two of the above values. Preferably, within the scattering vector ranging from 0.15 nm⁻¹ to 0.20 nm⁻¹, the slope of the SAXS spectrum of the polyester composition and/or the molded products thereof may range from -3.00 to -4.20. In this specification, the SAXS spectrum is obtained by adopting a small-angle scattering system to analyze a molded product with a thickness of 2.0 millimeters (mm) (*i.e.* test piece) at 25°C, using radiation of Cu Kα having a wavelength about 1.54Å as a light source of the incident beam ; wherein the molded product is manufactured by the polyester composition; the small-angle scattering system is available from Bruker N8 HORIZON; that is, the model of the small-angle scattering system is N8 Horizon manufactured by Bruker Corporation.

According to the instant disclosure, the polyester composition and/or the molded products thereof may have a total transmittance of 33%, 34%, 35%, 40%, 45%, 50%, 55%, 60%, 65% or 70%, or the total transmittance may fall within the ranges between any two of the above values such as a range from 35% to 70%. In one embodiment, for example, the polyester composition and/or the molded products thereof do not include any glass fibers, the polyester composition and/or the molded products thereof may have a total transmittance ranging from 33% to 70% in the near infrared (NIR) spectrum at a wavelength of 1064 nm. In another embodiment, for example, the polyester composition and/or the molded products thereof include glass fibers, the polyester composition and/or the molded products thereof may have a total transmittance ranging from 50% to 70% in the near infrared spectrum at a wavelength of 1064 nm. In this specification, the total transmittance in the near infrared spectrum is obtained by measuring the molded products thereof with a thickness of 2 mm.

According to the instant disclosure, the polyester composition and/or the molded products thereof may have a dissipation factor (Df) less than or equal to 0.008, 0.007, 0.006 or 0.005 at a frequency of 40 gigahertz (GHz). Optionally, the Df of the polyester composition and/or the molded products thereof at a frequency of 40 GHz may be 0.002, 0.003, 0.004, 0.005, 0.006, 0.007 or 0.008, or the Df at a frequency of 40 GHz may fall within the ranges between any two of the above values; for example, the Df at a frequency of 40 GHz may be from 0.002 to 0.008. In one embodiment, for example, the polyester composition and/or the molded products thereof do not include any glass fibers, the polyester composition and/or the molded products thereof may have a Df at 40 GHz within a range less than or equal to 0.007, or a range less than 0.007, or a range less than or equal to 0.006, or a range larger than or equal to 0.002 and less than or equal to 0.007, or a range larger than or equal to 0.002 and less than 0.007, or a range larger than or equal to 0.002 and less than or equal to 0.006. In another embodiment, for example, the polyester composition and/or the molded products thereof include glass fibers, the polyester composition and/or the molded products thereof may have a Df at 40 GHz within a range less than 0.008, or a range less than or equal to 0.007, or a range larger than or equal to 0.002 and less than 0.008, or a range larger than or equal to 0.002 and less than or equal to 0.007. In this specification, the Df is obtained by measuring the molded products thereof with a thickness of 0.2 mm according to IPC-TM650 2.5.5.13 test method.

According to the instant disclosure, the polyester composition and/or the molded products thereof may have a dielectric constant (Dk) less than or equal to 3.00, 2.90, 2.80, 2.70 or 2.60 at a frequency of 40 GHz. Optionally, the Dk of the polyester composition and/or the molded products thereof at a frequency of 40 GHz may be 2.00, 2.10, 2.20, 2.30, 2.40, 2.50, 2.60, 2.70, 2.80, 2.90 or 3.00, or the Dk at a frequency of 40 GHz may fall within the ranges between any two of the above values; for example, the Dk at a frequency of 40 GHz may be from 2.00 to 3.00. In one embodiment, for example, the polyester composition and/or the molded products thereof do not include any glass fibers, the polyester composition and/or the molded products thereof may have a Dk at 40 GHz within a range less than or equal to 2.66, or a range larger than or equal to 2.00 and less than or equal to 2.66. In another embodiment, for example, the polyester composition and/or the molded products thereof include glass fibers, the polyester composition and/or the molded products thereof may have a Dk at 40 GHz within a range less than or equal to 3.00, or a range larger than or equal to 2.00 and less than or equal to 3.00. In this specification, the Dk is obtained by measuring the molded products thereof with a thickness of 0.2 mm according to IPC-TM650 2.5.5.13 test method.

Optionally, the tensile modulus of the polyester composition and/or the molded products thereof may be 2600 MPa, 2700 MPa, 2800 MPa, ..., 5000 MPa, 6000 MPa, 7000 MPa, 8000 MPa, 9000 MPa, 10000 MPa, 11000 MPa or 12000 MPa, or the tensile modulus may fall within the ranges between any two of the above values. For example, the tensile modulus may be from 2600 MPa to 12000 MPa. In one embodiment, for example, the polyester composition and/or the molded products thereof do not include any glass fibers, the polyester composition and/or the molded products thereof may have a tensile modulus larger than or equal to 2600 MPa, or larger than or equal to 2700 MPa. In another embodiment, for example, the polyester composition and/or the molded products thereof include glass fibers, the polyester composition and/or the molded products thereof may have a tensile modulus larger than or equal to 5000 MPa, or larger than or equal to 10000 MPa. In this specification, the tensile modulus is obtained by measuring the molded products thereof with a thickness of 4.0 mm according to ISO 527:2019 test method.

Optionally, the flexural modulus of the polyester composition and/or the molded products thereof may be 2300 MPa, 2400 MPa, 2500 MPa, 2600 MPa, 2700 MPa, 2800 MPa, 2900 MPa, 3000 MPa, ..., 4000 MPa, 5000 MPa, 6000 MPa, 7000 MPa, 8000 MPa, 9000 MPa, 10000 MPa, or 12000 MPa, or the flexural modulus may fall within the ranges between any two of the above values. For example, the flexural modulus may be from 2300 MPa to 12000 MPa. In one embodiment, for example, the polyester composition and/or the molded products thereof do not include any glass fibers, the polyester composition and/or the molded products thereof may have a flexural modulus larger than or equal to 2300 MPa, or larger than or equal to 2400 MPa, or ranging from 2300 MPa to 3000 MPa. In another embodiment, for example, the polyester composition and/or the molded products thereof include glass fibers, the polyester composition and/or the molded products thereof may have a flexural modulus larger than or equal to 4000 MPa, or larger than or equal to 8000 MPa, or ranging from 5000 MPa to 10000 MPa. In this specification, the flexural modulus is obtained by measuring the molded products thereof with a thickness of 4.0 mm according to ISO 178:2019 test method.

Optionally, the heat deflection temperature (HDT) of the polyester composition and/or the molded products thereof may be 60°C, 65°C, 70°C, 75°C, 80°C, 85°C, 90°C, 95°C, ..., 150°C, 155°C, 160°C, 165°C, 175°C, 180°C, 185°C, 190°C or 195°C, or the HDT may fall within the ranges between any two of the above values. For example, the HDT may be from 60°C to 195°C. In one embodiment, for example, the polyester composition and/or the molded products thereof do not include any glass fibers, the polyester composition and/or the molded products thereof may have a HDT from 60°C to 90°C. In another embodiment, for example, the polyester composition and/or the molded products thereof include glass fibers, the polyester composition and/or the molded products thereof may have a HDT from 160°C to 195°C. In this specification, the HDT is obtained by measuring the molded products thereof with a thickness of 4.0 mm according to ISO 75:2020 test method.

Optionally, the polyester composition and/or the molded products thereof may have a density from 1.20 g/cm³ to 1.45 g/cm³.

It should be understood that there are no particularly limitations on the choice of the PBT resins as long as the polyester composition comprising said PBT resin can exhibit the specific above-mentioned slope of the SAXS spectrum. The PBT resins may be a commercially available product. For example, the PBT resins suitable to the instant disclosure may be Longlite 1100-211L purchased from Chang Chun Plastics Co., Ltd. or Ultradur B 4500 purchased from BASF SE, but it is not limited thereto. Optionally, in 100 parts by weight of the whole polyester composition, the PBT resin may be present in an amount of from 30 parts by weight to 95 parts by weight, or from 50 parts by weight to 95 parts by weight, or from 30 parts by weight to 90 parts by weight, or from 35 parts by weight to 80 parts by weight, but it is not limited thereto.

Optionally, the polyester composition and/or the molded products thereof may further comprise an additive resin; the additive resin may comprise a polybutylene adipate terephthalate resin (PBAT resin), a polycarbonate resin (PC resin), a polystyrene-based resin or any combination thereof, but it is not limited thereto. It should be understood that there are also no particularly limitations on the choice of the PBAT resins, the PC resins and the polystyrene-based resin as long as the polyester composition comprising said additive resin can exhibit the specific above-mentioned slope of the SAXS spectrum. For example, the PBAT resins suitable to the instant disclosure may be ECO-A05 purchased from Chang Chun Plastics Co., Ltd., but it is not limited thereto; the PC resins suitable to the instant disclosure may be WONDERLITE PC-122 purchased from Chi Mei Co., Ltd., but it is not limited thereto. In addition, the polystyrene-based resin suitable to the instant disclosure may be a high-impact polystyrene resin (HIPS resin), a general-purpose polystyrene resin (GPPS) or a syndiotactic polystyrene resin (SPS resin). There are no particularly limitations on the types of the styrene-based monomer suitable for synthesizing the polystyrene-based resin; for example, the styrene-based monomer may be styrene, 4-methyl styrene, 3-methyl styrene, 4-chlorostyrene, 4-fluorostyrene, 4-phenylstyrene, 4-*tert*-butylstyrene, α-methyl styrene or any combinations thereof, but it is not limited thereto. For example, the HIPS resin suitable to the instant disclosure may be POLYREX PH-88 purchased from Chi Mei Co., Ltd. or TAITAREX 666 purchased from Taita chemical company, but it is not limited thereto; the GPPS resin suitable to the instant disclosure may be POLYREX GP-33 purchased from Chi Mei Co., Ltd. or TAITAREX 861N/B purchased from Taita chemical company, but it is not limited thereto; the SPS resin suitable to the instant disclosure may be XAREC SP130 purchased from Idemitsu Kosan Co., Ltd., but it is not limited thereto. Optionally, in 100 parts by weight of the whole polyester composition, the additive resin may be present in an amount of from 1 part by weight to 60 parts by weight, or from 3 parts by weight to 40 parts by weight, or from 5 parts by weight to 30 parts by weight, but it is not limited thereto.

In one embodiment, the polyester composition and/or the molded products thereof may further comprise other ingredient(s) such as an alkali metal salt, an additive or a combination thereof. Specifically, the alkali metal may comprise sodium carbonate (soda), sodium hydrogen carbonate, sodium nitrite, monosodium orthophosphate, sodium benzoate, sodium octadecenoate, sodium formate, sodium acetate, sodium phenolate, sodium salicylate (NaC₆H₄(OH)CO₂), adipic acid disodium salt, sodium polyacrylate (ASAP), monosodium glutamate (MSG), sodium cyanate or any combination thereof, but it is not limited thereto; the additive may comprise an antioxidant, a release agent, a dye or any combination thereof, but it is not limited thereto. Optionally, in 100 parts by weight of the whole polyester composition, the alkali metal salt and/or the additive may be present in an amount of from 0.1 parts by weight to 10 parts by weight, or from 0.1 parts by weight to 5 parts by weight, or from 0.2 parts by weight to 3 parts by weight, but it is not limited thereto. In another embodiment, the polyester composition and/or the molded products thereof may further comprise glass fibers. Specifically, the polyester composition and/or the molded products thereof may comprise a combination of the alkali metal salt and glass fibers, or a combination of the additive and glass fibers, or a combination of the alkali metal salt, the additive and glass fibers. Optionally, in 100 parts by weight of the whole polyester composition, the glass fibers may be present in an amount of from 5 parts by weight to 40 parts by weight, or from 10 parts by weight to 30 parts by weight, but it is not limited thereto.

According to the instant disclosure, there are no particular limitations on the type of the thermoplastic molding methods to make the molded products comprising the polyester composition; optionally, one person skilled in the art can adopt various thermoplastic molding methods that are well known in the industry such as injection molding, extrusion molding, blow molding and hot press molding, but it is not limited thereto.

### IN THE DRAWINGS:

FIG.1 shows SAXS spectra of polyester compositions of Example 2 and Comparative Example 1.
FIG.2 shows SAXS spectra of polyester compositions of Example 6 and Comparative Example 3.

Hereinafter, multiple examples are provided to illustrate the implementation of the polyester composition and the molded product thereof of the instant disclosure, while multiple comparative examples are provided as comparison. A person having ordinary skill in the art can easily realize the advantages and effects of the instant disclosure from the following examples and comparative examples. The descriptions proposed herein are just preferable embodiments for the purpose of illustrations only, not intended to limit the scope of the instant disclosure. Various modifications and variations could be made in order to practice or apply the instant disclosure without departing from the spirit and scope of the instant disclosure.

### 〈〈Polyester composition 〉〉

### Ingredient descriptions of said polyester compositions

1. PBT resin:
   product name: Longlite 1100-211L purchased from Chang Chun Plastics Co., Ltd.;
   relative density: 1.31 g/cm³;
   intrinsic viscosity (IV): 0.94 dl/g;
   melting point (Tm): 225°C;
   melt flow index (MI) (@250°C/2.16 kg): 39.5 g/10 min.
2. PBAT resin:
   product name: ECO-A05 purchased from Chang Chun Plastics Co., Ltd.;
   intrinsic viscosity: 1.47 dl/g;
   melting point: 120°C;
   melt flow index (@ 190°C/2.16 kg): 5 g/10 min.
3. PC resin:
   product name: WONDERLITE PC-122 purchased from Chi Mei Co., Ltd.;
   relative density: 1.2 g/cm³;
   melt flow index (@300°C/1.2 kg): 22 g/10 min.
4. GPPS resin:
   product name: POLYREX GP-33 purchased from Chi Mei Co., Ltd.;
   relative density: 1.04 g/cm³;
   melt flow index (@200°C/5 kg): 8.0 ml/10 min.
5. HIPS resin:
   product name: POLYREX PH-88 purchased from Chi Mei Co., Ltd.;
   relative density: 1.03 g/cm³;
   melt flow index (@200°C/5 kg): 5.5 ml/10 min.
6. glass fiber:
   product name: T-187H purchased from Japan Nippon Electric Glass Co., Ltd.
7. antioxidant:
   product name: ADK STAB A-611 purchased from Chang Chun Petrochemical Co., Ltd.
8. release agent:
   product name: WAX EB-P purchased from Kao Oleochemical.
9. colorant masterbatch developed for laser transmission welding:
   product name: eBIND LTW-8904 purchased from Orient Chemical.

### Example 1: polyester composition

79.40 parts by weight of the PBT resin, 20.00 parts by weight of the GPPS resin, 0.20 parts by weight of sodium carbonate, 0.20 parts by weight of the antioxidant and 0.20 parts by weight of the release agent were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Example 1, and the relative density thereof was about 1.256 g/cm³. The description of each ingredient in said polyester composition was as described above.

### Example 2: polyester composition

74.10 parts by weight of the PBT resin, 25.00 parts by weight of the GPPS resin, 0.50 parts by weight of sodium carbonate, 0.20 parts by weight of the antioxidant and 0.20 parts by weight of the release agent were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Example 2, and the relative density thereof was about 1.239 g/cm³. The description of each ingredient in said polyester composition was as described above.

### Example 3: polyester composition

89.10 parts by weight of the PBT resin, 10.00 parts by weight of the GPPS resin, 0.50 parts by weight of sodium carbonate, 0.20 parts by weight of the antioxidant and 0.20 parts by weight of the release agent were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Example 3, and the relative density thereof was about 1.293 g/cm³. The description of each ingredient in said polyester composition was as described above.

### Example 4: polyester composition

94.10 parts by weight of the PBT resin, 5.00 parts by weight of the GPPS resin, 0.50 parts by weight of sodium nitrite, 0.20 parts by weight of the antioxidant and 0.20 parts by weight of the release agent were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Example 4, and the relative density thereof was about 1.302 g/cm³. The description of each ingredient in said polyester composition was as described above.

### Example 5: polyester composition

69.10 parts by weight of the PBT resin, 5.00 parts by weight of the PBAT resin, 25.00 parts by weight of the PC resin, 0.50 parts by weight of monosodium phosphate, 0.20 parts by weight of the antioxidant and 0.20 parts by weight of the release agent were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Example 5, and the relative density thereof was about 1.277 g/cm³. The description of each ingredient in said polyester composition was as described above.

### Example 6: polyester composition

79.10 parts by weight of the PBT resin, 10.00 parts by weight of the GPPS resin, 0.50 parts by weight of sodium carbonate, 10.00 parts by weight of the glass fibers, 0.20 parts by weight of the antioxidant and 0.20 parts by weight of the release agent were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Example 6, and the relative density thereof was about 1.345 g/cm³. The description of each ingredient in said polyester composition was as described above.

### Example 7: polyester composition

58.60 parts by weight of the PBT resin, 20.00 parts by weight of the GPPS resin, 1.00 part by weight of sodium hydrogen carbonate, 20.00 parts by weight of the glass fibers, 0.20 parts by weight of the antioxidant and 0.20 parts by weight of the release agent were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Example 7, and the relative density thereof was about 1.375 g/cm³. The description of each ingredient in said polyester composition was as described above.

### Example 8: polyester composition

38.10 parts by weight of the PBT resin, 30.00 parts by weight of the GPPS resin, 0.50 parts by weight of sodium benzoate, 30.00 parts by weight of the glass fibers, 0.20 parts by weight of the antioxidant, 0.20 parts by weight of the release agent and 1.00 part by weight of the colorant masterbatch developed for laser transmission welding were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Example 8, and the relative density thereof was about 1.402 g/cm³. The description of each ingredient in said polyester composition was as described above.

### Example 9: polyester composition

47.85 parts by weight of the PBT resin, 20.00 parts by weight of the GPPS resin, 0.25 parts by weight of sodium carbonate, 30.00 parts by weight of the glass fibers, 0.20 parts by weight of the antioxidant, 0.20 parts by weight of the release agent and 1.50 parts by weight of the colorant masterbatch developed for laser transmission welding were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Example 9, and the relative density thereof was about 1.443 g/cm³. The description of each ingredient in said polyester composition was as described above.

### Comparative Example 1: polyester composition

99.60 parts by weight of the PBT resin, 0.20 parts by weight of the antioxidant and 0.20 parts by weight of the release agent were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Comparative Example 1, and the relative density thereof was about 1.304 g/cm³. The description of each ingredient in said polyester composition was as described above.

### Comparative Example 2: polyester composition

89.60 parts by weight of the PBT resin, 5.00 parts by weight of the HIPS resin, 5.0 parts by weight of sodium octadecanoate, 0.20 parts by weight of the antioxidant and 0.20 parts by weight of the release agent were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Comparative Example 2, and the relative density thereof was about 1.278 g/cm³. The description of each ingredient in said polyester composition was as described above.

### Comparative Example 3: polyester composition

59.60 parts by weight of the PBT resin, 10.00 parts by weight of the GPPS resin, 30.00 parts by weight of the glass fibers, 0.20 parts by weight of the antioxidant and 0.20 parts by weight of the release agent were fed into the screw extruder in a quantitative feeding manner through a gravimetric feeder to fully mix said ingredients. The mixture was melt-kneaded and extruded from the screw extruder to become strands under 260°C. The strands were then cut into pellets to obtain the final product of the polyester composition of Comparative Example 3, and the relative density thereof was about 1.479 g/cm³. The description of each ingredient in said polyester composition was as described above.

It should be understood that apart from the methods adopted in the above-mentioned examples, there are no particular limitations on the kind of the devices used for mixing said ingredients; that is, in addition to the screw extruder illustrated above, other mixing devices to uniformly mix the ingredients such as Brabender mixer and Banbury mixer may be adopted by one person skilled in the art.

Besides, one person skilled in the art could mix multiple ingredients to obtain a mixture in advance as needed; then said mixture may be fed into the mixing device, followed by a melting and kneading process at an appropriate temperature; finally, the polyester composition may be extruded and followed by a cooling step and a granulation step (cut into pellets) by a pelletizer. Optionally, the temperature of the melting and kneading process may be from 220°C to 300°C, but it is not limited thereto.

### (Molded product)

### Examples 1A to 9A and Comparative Examples 1A to 3A

The molded products of Examples 1A to 9A and Comparative Examples 1A to 3A were respectively made of aforesaid polyester compositions of Examples 1 to 9 and Comparative Examples 1 to 3 by the same forming method mentioned below.

Specifically, an injection molding machine (manufacturer: Victor Taichung Machinery Works Co., Ltd., model: VS-100K) was adopted to inject the polyester composition into a molded product with a specific thickness; wherein the mold temperature was about 70°C and the injection temperature was about 265°C. Each of the molded products of Examples and Comparative Examples was manufactured by the same conditions for injection molding except for the polyester composition used as the raw material.

It should be understood that in addition to the methods adopted in the above-mentioned examples, there are no particular limitations on the kind of the molding methods; that is, one person skilled in the art may adopt various well-known thermoplastic molding methods to make the molded products from the polyester compositions. For example, apart from injection molding, extrusion molding, blow molding or hot press molding may be adopted. Optionally, the mold temperature of aforesaid injection molding machine may be set from 40°C to 70°C, and the injection temperature of aforesaid injection molding machine may be set from 240°C to 280°C; the setting should not be limited to the temperature mentioned above in the embodiments.

### Test Example 1: small angle X-ray scattering (SAXS)

The polyester compositions of Examples 1 to 9 and Comparative Examples 1 to 3 were used as test samples.

First, the polyester compositions were respectively injected to form the test sample with a thickness of about 2.0 mm. Then, each of foresaid test samples was horizontally placed on a jig stage of the small-angle scattering system (manufacturer: Bruker Corporation; model: N8 Horizon), and then the incident beam transmitted through the test sample with the thickness of about 2.0 mm to result in scattering by particles; then, the detector was used to receive the signal of aforesaid scattering and to measure the intensities of X-rays scattered by the test sample as a function of the scattering angles (2θ) ranging from 0° to 5°. Moreover, the small-angle scattering system installed a software (DIFFRAC.SAXS software suite) for analyzing the SAXS data to obtain the SAXS spectrum with the vertical axis representing scattering intensity (unit: arbitrary unit (a.u.)) and the horizontal axis representing scattering vector (unit: nm⁻¹), thereby analyzing changes in nanostructure patterns. Wherein, the light source of the incident beam: radiation of Cu Kα, and the wavelength thereof was about 1.54Å. The distance between the incident beam and the test sample was 58 centimeters (cm); the distance between the test sample and the detector was 0.6 meters (m); the exposure time was 1200 seconds (sec). Before the test samples were tested, the background correction was done for the atmosphere and the sample holder by the glassy carbon, so as to reduce signal noise from the background.

In each of the SAXS spectra of Examples and Comparative Examples, the slope of the plot within the scattering vector ranging from 0.15 nm⁻¹ to 0.20 nm⁻¹ was analyzed (hereinafter referred to as "SAXS slope"), and the results were summarized in Table 1 and Table 2.

In the polyester composition, discrete particles with a size less than 100 nanometers (nm) or two or more incompatible resins would cause scattering due to the heterogeneous structures, resulting in the scattering intensity corresponding to the low scattering vector (small angle position) being high in the SAXS spectrum.

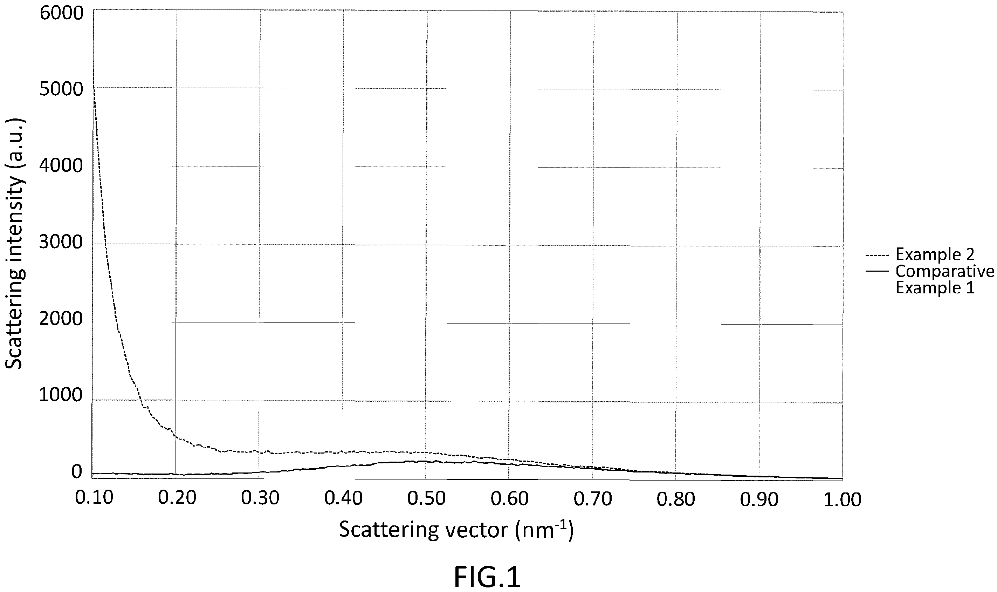

In the group of polyester compositions free of glass fibers, the SAXS spectra of Example 2 and Comparative Example 1 were taken as examples, and the comparison between them was shown in Fig. 1. The SAXS spectrum of Example 2 presented with a dotted line clearly had a negative slope (*i.e.,* a downward trend) within the scattering vector ranging from 0.15 nm⁻¹ to 0.20 nm⁻¹. On the contrary, the SAXS spectrum of Comparative Example 1 presented with a solid line exhibited a slightly upward trend (*i.e.,* a positive slope) within the scattering vector ranging from 0.15 nm⁻¹ to 0.20 nm⁻¹.

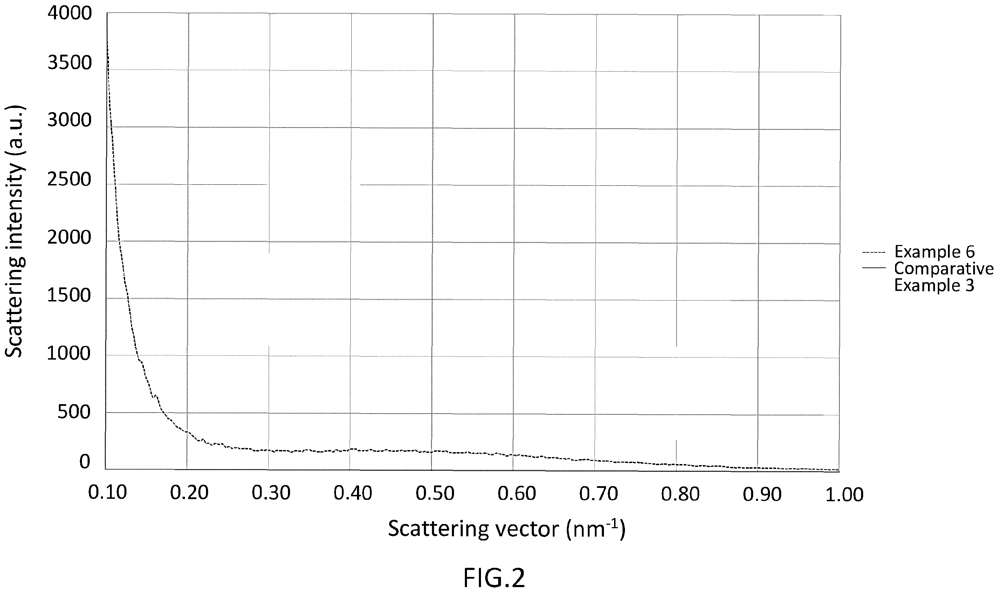

In the group of polyester compositions that comprised glass fibers, the SAXS spectra of Example 6 and Comparative Example 3 were taken as examples, and the comparison between them was shown in Fig. 2. Similarly, the SAXS spectrum of Example 6 presented with a dotted line clearly had a negative slope (*i.e.,* a downward trend) within the scattering vector ranging from 0.15 nm⁻¹ to 0.20 nm⁻¹. On the contrary, the SAXS spectrum of Comparative Example 3 presented with a solid line was almost flat and closely adhered on the X-axis within the scattering vector ranging from 0.15nm⁻¹ to 0.20 nm⁻¹ (even from the scattering vector from greater than 0 nm⁻¹ to 1.0 nm⁻¹).

**Table 1: SAXS slope (@0.15 nm⁻¹ to 0.20 nm⁻¹), total transmittance (@ 1064 nm), Dk (@ 40 GHz) and Df (@ 40 GHz) of the polyester compositions of Examples 1 to 5 (E1 to E5) and Comparative Examples 1 and 2 (C1 to C2)**

| | E1 | E2 | E3 | E4 | E5 | C1 | C2 |
|---|---|---|---|---|---|---|---|
| SAXS slope | -3.84 | -4.09 | -3.73 | -3.38 | -4.00 | 0.33 | -1.27 |
| Total transmittance | 42.2% | 55.6% | 51.7% | 67.4% | 33.3% | 25.6% | 21.7% |
| Dk | 2.62 | 2.50 | 2.66 | 2.53 | 2.45 | 2.68 | Not moldable |
| Df | 0.005 | 0.005 | 0.006 | 0.006 | 0.007 | 0.007 | Not moldable |

**Table 2: SAXS slope (@0.15 nm⁻¹ to 0.20 nm⁻¹), total transmittance (@ 1064 nm), Dk (@ 40 GHz) and Df (@ 40 GHz) of the polyester compositions of Examples 6 to 9 (E6 to E9) and Comparative Example 3 (C3)**

| | E6 | E7 | E8 | E9 | C3 |
|---|---|---|---|---|---|
| SAXS slope | -3.94 | -3.79 | -3.02 | -3.02 | 0.24 |
| Total transmittance | 55.0% | 59.5% | 57.8% | 58.7% | 24.9% |
| Dk | 2.69 | 2.83 | 3.00 | 2.96 | 3.01 |
| Df | 0.006 | 0.007 | 0.006 | 0.007 | 0.008 |

As shown in Table 1 and Table 2, the SAXS slopes of the polyester compositions of Examples 1 to 9 fell in the range from -2.00 to -4.20, which showed that the polyester compositions of Examples 1 to 9 indeed had discrete nanostructures. On the other hand, all of the SAXS slopes of the polyester compositions of Comparative Examples 1 to 3 were outside the range from -2.00 to -4.20; that is, the SAXS slopes thereof were greater than -2.00, indicating that the polyester compositions of Comparative Examples 1 to 3 did not have obviously discrete nanostructures. It could be seen that the nanostructures of the polyester compositions of Examples 1 to 9 were different from the nanostructures of the polyester compositions of Comparative Examples 1 to 3 since their SAXS slopes were significantly different within the scattering vector from 0.15 nm⁻¹ to 0.20 nm⁻¹ in the SAXS spectra.

### Test Example 2: total transmittance

The polyester compositions of Examples 1 to 9 and Comparative Examples 1 to 3 were respectively injection molded to obtain resulting molded products with the thickness of about 2.0 mm as test samples for this test.

A UV/Vis/NIR spectrometer equipped with a 150-mm integrating sphere (model: LAMBDA 1050, manufactured by PerkinElmer) was used to measure the total transmittance of the test samples respectively at the wavelength of 1064 nm in the near infrared light, and the results were listed in Table 1 and Table 2. The higher the total transmittance of the molded product, the better the laser light penetration.

As shown in Tables 1 and 2, all of the molded products made from the polyester compositions of Examples 1 to 9 had a higher total transmittance at the near infrared light than that of the molded products made from the polyester compositions of Comparative Examples 1 to 3. Therefore, it was shown that the polyester compositions of Examples 1 to 9 were more suitable for laser welding so that the molded products thereof may be more suitable for automotive electronic components or 5G communication materials.

As shown in Tables 1 and 2, all of the molded products made from the polyester compositions of Examples 1 to 9 could have the total transmittance at the near infrared light from 33% to 70%; however, all of the molded products made from the polyester compositions of Comparative Examples 1 to 3 did not reach 33%. Therefore, it was shown that the polyester compositions of Comparative Examples 1 to 3 were not suitable for laser welding, nor were they suitable for automotive electronic components or 5G communication materials.

### Test Example 3: dielectric properties

The polyester compositions of Examples 1 to 9 and Comparative Examples 1 to 3 were respectively injection molded to obtain resulting molded products with the thickness of about 0.2 mm as test samples for this test.

A TE mode cavity resonator (manufactured by AET, INC.) and a vector network analyzer (VNA) (model: MS46122B, manufactured by ANRITSU) was used to measure the dielectric constant (Dk) and dissipation factor (Df) at 40 GHz of the test samples respectively according to IPC-TM650 2.5.5.13, and the results were listed in Table 1 and Table 2. The lower the Dk and/or Df of the molded product, the better its ability to suppress electromagnetic wave energy loss and the smaller the electromagnetic wave transmission loss.

As shown in Table 1, from the comparison of the dielectric properties of the polyester compositions of Examples 1 to 5 with that of the polyester compositions of Comparative Examples 1 to 2 (without glass fibers), it could be seen that all of the Dk at 40 GHz of the polyester compositions of Examples 1 to 5 were lower than the Dk at 40 GHz of the polyester composition of Comparative Example 1. In addition, all of the Df at 40 GHz of the polyester compositions of Examples 1 to 5 were not higher than, even lower than the Df at 40 GHz of the polyester composition of Comparative Example 1. As for the polyester composition of Comparative Example 2, its dielectric properties could not be analyzed since it could not be injection molded to make a sheet with a thickness of about 0.2 mm.

Moreover, as shown in Table 2, from the comparison of the dielectric properties of the polyester compositions of Examples 6 to 9 with that of the polyester composition of Comparative Example 3 (containing glass fibers), it could be seen that all of the Dk and the Df at 40 GHz of the polyester compositions of Examples 6 to 9 were lower than the Dk and the Df at 40 GHz of the polyester composition of Comparative Example 3.

As a result, from the results in Tables 1 and 2, it could be seen that compared with Comparative Examples 1 to 3, the polyester compositions of Examples 1 to 9 were more beneficial in suppressing the loss of electromagnetic wave energy so that the molded products thereof may be suitable for automotive electronic components or 5G communication materials.

From the Tables 1 and 2, the polyester compositions free of glass fibers may have a Dk at 40 GHz less than or equal to 2.66 and a Df at 40 GHz less than or equal to 0.007. On the other hand, the polyester composition which comprises glass fibers may have a Dk at 40 GHz less than or equal to 3.00 and a Df at 40 GHz less than or equal to 0.008.

### Test Example 4: mechanical properties

The polyester compositions of Examples 1 to 9 and Comparative Examples 1 to 3 were respectively injection molded to obtain resulting molded products with the thickness of about 4.0 mm (*i.e.* Examples 1A to 9A and Comparative Examples 1A to 3A) as ISO multifunctional test samples for this test.

A universal testing machine (model: Z010, manufactured by Zwick/Roell Pte. Ltd.) was used to measure the tensile modulus of aforesaid ISO multifunctional test samples at 23°C according to ISO 527:2019 Standard Method, and the results were listed in Table 3 and Table 4. Besides, a universal testing machine (model: Z005, manufactured by Zwick/Roell Pte. Ltd.) was used to measure the flexural modulus of aforesaid ISO multifunctional test samples at 23°C according to ISO 178:2019 Standard Method, and the results were listed in Table 3 and Table 4. The higher the tensile modulus and flexural modulus of the molded product, the better its tensile elasticity and flexural rigidity.

As shown in Table 3, it could be seen that all of the tensile modulus and the flexural modulus of the molded products of Examples 1A to 5A were higher than the tensile modulus and the flexural modulus of the molded products of Comparative Examples 1A and 2A, indicating that the molded products of Examples 1A to 5A had better tensile elasticity and flexural rigidity than that of the molded products of Comparative Examples 1A and 2A. Specifically, the tensile modulus of the molded products of Examples 1A to 5A could be larger than or equal to 2600 MPa, and the flexural modulus of the molded products of Examples 1A to 5A could be larger than or equal to 2300 MPa.

As shown in Table 4, the tensile modulus of the molded products of Examples 6A to 9A could be larger than or equal to 5000 MPa, and the flexural modulus of the molded products of Examples 6A to 9A could be larger than or equal to 4000 MPa. The tensile modulus of the molded products of Examples 8A and 9A could be larger than or equal to 10000 MPa, and the flexural modulus of the molded products of Examples 8A and 9A could be larger than or equal to 8000 MPa. Further, it could be seen that the tensile modulus and the flexural modulus of the molded products of Examples 8A and 9A were higher than the tensile modulus and the flexural modulus of the molded products of Comparative Example 3A, indicating that the molded products of Examples 8A and 9A had better tensile elasticity and flexural rigidity than that of the molded products of Comparative Example 3A.

**Table 3: tensile modulus, flexural modulus and heat deflection temperature of the molded products of Examples 1A to 5A (E1A to E5A) and Comparative Examples 1A and 2A (C1A and C2A)**

| | E1A | E2A | E3A | E4A | E5A | C1A | C2A |
|---|---|---|---|---|---|---|---|
| Tensile modulus (MPa) | 2855 | 2914 | 2862 | 2911 | 2654 | 2498 | 2539 |
| Flexural modulus (MPa) | 2724 | 2859 | 2732 | 2692 | 2466 | 2282 | 2234 |
| HDT (°C) | 73.4 | 75.2 | 67.7 | 64.1 | 60.3 | 54.5 | 67.6 |

**Table 4: tensile modulus, flexural modulus and heat deflection temperature of the molded products of Examples 6A to 9A (E6A to E9A) and Comparative Example 3A (C3A)**

| | E6A | E7A | E8A | E9A | C3A |
|---|---|---|---|---|---|
| Tensile modulus (MPa) | 5120 | 7578 | 10344 | 10360 | 9967 |
| Flexural modulus (MPa) | 4276 | 5984 | 8280 | 8159 | 7883 |
| HDT (°C) | 161.9 | 185.2 | 192.3 | 188.8 | 196.5 |

### Test Example 5: heat deflection temperature

The test adopted the above-mentioned ISO multifunctional test samples of Test Example 4 (thickness of about 4.0 mm) and used a HDT tester (model: 6M-2, manufacturer: Toyo Seiki Seisaku-sho, Ltd.) according to ISO 75: 2020 Standard Method. Specifically, a load of 1.8 MPa was applied to the ISO multifunctional test samples, and the ISO multifunctional test samples were heated from 23°C with a heating rate of 120°C/hour until the deformation of said test samples reached 0.34 mm. During the heating period, the bending temperatures of the ISO multifunctional test samples were respectively measured and recorded as the heat deformation temperature, and the results were listed in Table 3 and Table 4.

From the results in Tables 3 and 4, the HDT of the molded products of Examples 1A to 9A could be from 60°C to 195°C, indicating that the molded products of Examples 1A to 9A could have a desired heat resistance. Specifically, the HDT of the molded products of Examples 1A to 5A could be from 60°C to 90°C, and the HDT of the molded products of Examples 6A to 9A could be from 160°C to 195°C. It could be seen that the molded products comprising glass fibers can exhibit better heat resistance.

### Discussion on the experimental results

Based on the results of Test Examples 1 to 3, the SAXS slopes of the polyester compositions of Examples 1 to 9 fell within the specific range from -2.00 to -4.20 which means that the polyester compositions of Examples 1 to 9 respectively had a desired discrete nanostructure, so the molded products thereof can have a total transmittance for near infrared light from 33% to 70% and good dielectric properties (*i.e.* lower Dk and/or lower Df). On the contrary, the SAXS slopes of the polyester compositions of Comparative Examples 1 to 3 did not fall within the aforesaid specific range which means that the polyester compositions of Comparative Examples 1 to 3 did not have the significantly discrete nanostructure, so the molded products thereof had lower total transmittance for near infrared light and poorer dielectric properties. It could be proven that compared with Comparative Examples 1 to 3, the polyester compositions and/or the molded products thereof of Examples 1 to 9 could have the advantages of high laser transmittance and low electromagnetic wave transmission loss. Thus, the polyester composition and/or the molded products thereof of the instant disclosure can be particularly suitable for products in the vehicles, communications, aerospace and medical industries.

Further, please further refer to the results of Test Examples 4 and 5: the polyester compositions and/or the molded products thereof of Examples 1 to 9 could have a certain tensile modulus, flexural modulus and heat deformation temperature. It showed that the polyester compositions and/or the molded products thereof of Examples 1 to 9 can maintain the tensile elasticity, flexural rigidity and heat resistance at the same time in addition to having the advantages of high laser light penetration and low electromagnetic wave transmission loss.

In summary, the polyester composition and/or the molded products thereof of the instant disclosure both have high laser transmittance and low electromagnetic wave transmission loss, so the polyester composition and/or the molded products thereof of the instant disclosure can be conducive to expanding the applications and design flexibility of laser welding; thus, the requirements of the next generation of high-frequency communications can be met while the value of laser welding plastic joining products can be enhanced.

## Claims

1. A polyester composition comprising polybutylene terephthalate resin, **characterized in that**:
the polyester composition is analyzed by small angle X-ray scattering (SAXS) to obtain a spectrum with a vertical axis representing scattering intensity and a horizontal axis representing scattering vector;
within the scattering vector ranging from 0.15 nm⁻¹ to 0.20 nm⁻¹, the SAXS spectrum of the polyester composition has a slope ranging from -2.00 to -4.20.

2. The polyester composition as claimed in claim 1, **characterized in that** the slope of the SAXS spectrum ranges from -3.00 to -4.20 within the scattering vector ranging from 0.15 nm⁻¹ to 0.20 nm⁻¹.

3. The polyester composition as claimed in claim 1 or 2, **characterized in that** the polyester composition comprises a polybutylene adipate terephthalate resin, a polycarbonate resin, a polystyrene-based resin or any combination thereof.

4. The polyester composition as claimed in any one of claims 1 to 3, **characterized in that** the polyester composition comprises an alkali metal salt, an additive or a combination thereof; wherein the additive comprises an antioxidant, a release agent, a dye or any combination thereof.

5. The polyester composition as claimed in any one of claims 1 to 4, **characterized in that** the polyester composition comprises glass fibers.

6. The polyester composition as claimed in any one of claims 1 to 4, **characterized in that** the polyester composition has a dissipation factor (Df) less than or equal to 0.007 at a frequency of 40 gigahertz (GHz).

7. The polyester composition as claimed in claim 5, **characterized in that** the polyester composition has a Df less than 0.008 at a frequency of 40 GHz.

8. The polyester composition as claimed in any one of claims 1 to 4, **characterized in that** the polyester composition has a dielectric constant (Dk) less than or equal to 2.66 at a frequency of 40 GHz.

9. The polyester composition as claimed in claim 5 or 7, **characterized in that** the polyester composition has a Dk less than or equal to 3.00 at a frequency of 40 GHz.

10. The polyester composition as claimed in any one of claims 1 to 9, **characterized in that** the SAXS spectrum is obtained by adopting a small-angle scattering system to analyze a molded product with a thickness of 2.0 millimeters; wherein the molded product is manufactured by the polyester composition; the small-angle scattering system is available from Bruker N8 HORIZON.

11. A molded product, **characterized in that** the molded product is manufactured by a raw material comprising the polyester composition as claimed in any one of claims 1 to 10.

12. The molded product as claimed in claim 11, **characterized in that** the molded product has a tensile modulus larger than or equal to 2600 MPa.

13. The molded product as claimed in claim 11 or 12, **characterized in that** the molded product has a flexural modulus larger than or equal to 2300 MPa.

14. The molded product as claimed in any one of claims 11 to 13, **characterized in that** the polyester composition comprised in the molded product comprises glass fibers.

15. The molded product as claimed in any one of claims 11 to 14, **characterized in that** the molded product has a total transmittance ranging from 33% to 70% in the near infrared spectrum at a wavelength of 1064 nm.
